# EUROPÄISCHE PATENTSCHRIFT

(11) **EP 2 162 334 B1**
(45) Veröffentlichungstag und Bekanntmachung des Hinweises auf die Patenterteilung: **05.12.2012**
(21) Anmeldenummer: 08759301.8
(22) Anmeldetag: 20.06.2008
(51) Int. Cl.: B60W 30/14

(54) **GESCHWINDIGKEITSREGLER FÜR KRAFTFAHRZEUGE**
CRUISE CONTROLLER FOR MOTOR VEHICLES
REGULATEUR DE VITESSE POUR VEHICULES AUTOMOBILES

(30) Priorität: 06.07.2007 DE 102007031542
(43) Veröffentlichungstag der Anmeldung: 17.03.2010
(73) Patentinhaber: Bayerische Motoren Werke Aktiengesellschaft, 80809 München (DE)
(72) Erfinder: HUANG, Pei-Shih Dennis, 85293 Reichertshausen (DE)
(86) Internationale Anmeldenummer: PCT/EP2008/004974
(87) Internationale Veröffentlichungsnummer: WO 2009/006992

(56) Entgegenhaltungen:
- EP-A- 1 008 482
- DE-A1- 4 446 592
- DE-A1-102005 023 701
- FR-A- 2 780 350
- FR-A- 2 816 892
- GB-A- 2 382 158
- US-A1- 2004 215 384

## Beschreibung

Die Erfindung bezieht sich auf einen Geschwindigkeitsregler für Kraftfahrzeuge zur Regelung der Geschwindigkeit auf eine vorgegebene Sollgeschwindigkeit nach dem Oberbegriff des Anspruchs 1.

Geschwindigkeitsregler ermöglichen ein Fahren mit einer vom Fahrer einstellbaren Sollgeschwindigkeit ohne dass der Fahrer die Geschwindigkeit dauern über das Gaspedal vorgeben muss. Diese Regler sind vor allem bei Fahrten auf Autobahnen mit geringer Verkehrsdichte geeignet, da hier ein Fahren mit konstanter Geschwindigkeit oft gewünscht ist.

Derartige Geschwindigkeitsregler können zusätzlich mit einer Abstands-Regelfunktion ausgestattet sein. Hierbei wird prinzipiell auf die vorgegebene Sollgeschwindigkeit geregelt solange kein vorausfahrendes Fahrzeug detektiert wird. Befindet sich jedoch ein vorausfahrendes Fahrzeug vor dem mit dem Geschwindigkeitsregler ausgestattetem Fahrzeug, wird eine Regelung auf einen vorgegebenen Sollabstand vorgenommen, um einen Sicherheitsabstand zu diesem vorausfahrenden Fahrzeug einhalten zu können. Diese mit einer Abstands-Regelfunktion erweiterten Geschwindigkeitsregler können bei einer sog. Folgefahrt auf ein vorausfahrendes Fahrzeug teilweise bis in den Stillstand und aus dem Stillstand heraus regeln.

Gelegentlich können bei einer Geschwindigkeitsregelung auf eine vorgegebene Sollgeschwindigkeit Situationen auftreten, bei denen eine Regelung der Geschwindigkeit auf die vorgegebene Geschwindigkeit aus Sicherheitsgründen eher ungünstig ist. Aus diesem Grund sind bereits Geschwindigkeitsregler bekannt, die bei einem Bremseingriff zur fahrdynamischen Stabilisierung automatisch deaktiviert werden.

Weiter offenbart die EP 1 726 471 A1 einen Geschwindigkeitsregler mit einer Überwachungseinheit zum Modifizieren der Regelfunktion in Abhängigkeit vom Fahrbahnzustand. Dazu wird in der Überwachungseinrichtung anhand der gemessenen Raddrehzahlen der Fahrbahnzustand ermittelt und bewertet. Weichen die Raddrehzahldifferenzen der einzelnen Räder von den für Kurvenfahrt oder aufgrund des Antriebsschlupfes typischen Raddrehzahldifferenzen ab, wird eine Modifizierung der Regelfunktion bspw. in Form eines Abschaltens des Geschwindigkeitsreglers vorgenommen. Der nächstliegende Stand der Tecknik ist in der EP 1726 471 A1 gesehen.

Weiter offenbart die DE 195 02 954 A1 ein Verfahren zur Geschwindigkeitsregelung, bei dem aufgrund aktueller oder abgespeicherter Fahrweginformationen über den vorausliegenden Streckenabschnitt unterschiedliche Fahrzeuggeschwindigkeiten eingestellt werden können. So wird in Abhängigkeit von Kenngrößen der befahrenen Strecke eine Sollgeschwindigkeit ermittelt und mit der vom Fahrer vorgegebenen Sollgeschwindigkeit verglichen. Unterschreitet bspw. die eine Kurve kennzeichnende ermittelte Sollgeschwindigkeit die vom Fahrer vorgegebene Sollgeschwindigkeit, wird die Stellgröße für die Geschwindigkeitsregelung aufgrund der ermittelten, niedrigeren Sollgeschwindigkeit berechnet.

Schließlich offenbart die US2004/215384 A1 ein Verfahren zur Regelung der Fahrstabilität bei dem anhand verschiedener Eingangsgrößen eine stabile Grenzgeschwindigkeit berechnet wird und bei Überschreitung der stabilen Grenzgeschwindigkeit durch die aktuelle Fahrzeuggeschwindigkeit die aktuelle Fahrzeuggeschwindigkeit auf die berechnete stabile Geschwindigkeit geregelt wird.

Aufgabe der Erfindung ist es, einen Geschwindigkeitsregler anzugeben, der auf einfache Weise aktuelle Fahrweginformationen während einer aktiven Geschwindigkeitsregelung berücksichtigt.

Diese Aufgabe wird durch einen Geschwindigkeitsregler nach Anspruch 1 gelöst. Vorteilhafte Weiterbildungen ergeben sich aus den abhängigen Ansprüchen.

Der erfindungsgemäße Geschwindigkeitsregler zur Regelung der Geschwindigkeit auf eine vorgegebene Sollgeschwindigkeit ist mit einer Überwachungseinrichtung zur Auswertung von Fahrzeugzustandsgrößen ausgestattet. Die Erfindung zeichnet sich dadurch aus, dass die Überwachungseinheit dazu ausgebildet ist, den aktuellen Lenkeinschlag und/oder die aktuelle Querbeschleunigung und/oder die aktuelle Gierrate auszuwerten und bei Überschreiten zumindest eines vorgegebenen ersten Fahrzeugzustandsgrö-βengrenzwertes durch eine der ausgewerteten Fahrzeugzustandsgrößen die Geschwindigkeitsregelfunktion in einen Standby-Modus zu schalten. Der Standby-Modus zeichnet sich dadurch aus, dass die Geschwindigkeitsregelung während dieses Modus zwar eingeschaltet, aber nicht aktiv ist, d. h. die Geschwindigkeitsregelung ist unterbrochen und der Fahrer ist selbst für die Geschwindigkeitsregelung verantwortlich.

Anhand des Lenkeinschlags oder der Querbeschleunigung oder der Gierrate kann auf einfache Weise festgestellt werden, ob sich das Fahrzeug auf einem Straßenabschnitt befindet, bei dem eine Geschwindigkeitsregelung unter Umständen zu kritischen Situationen führen könnte. Die genannten Fahrzeugzustandsgrößen sind ein Maß für den momentanen Fahrbahnverlauf, insbesondere für den Kurvenradius des aktuell befahrenen Straßenabschnitts. Überschreitet der aktuelle Lenkeinschtag einen vorgegebenen ersten Lenkeinschlaggrenzwert und/oder die aktuelle Querbeschleunigung einen vorgegebenen ersten Querbeschleunigungsgrenzwert und/oder die aktuelle Gierrate einen vorgegebenen ersten Gierratengrenzwert wird der Geschwindigkeitsregler aus seinem bisher aktiven Betriebsmodus, dem Aktivmodus, in einen Standby-Modus geschaltet. Solange der Fahrer keinen Beschleunigungs- oder Verzögerungswunsch vorgibt, wird das Fahrzeug aufgrund der Motorbremse bzw. des Motorschleppmoments automatisch verlangsamt. Somit kann sichergestellt werden, dass die Geschwindigkeit des Fahrzeugs automatisch auf einfache Weise auf eine diesem Straßenverlauf angepasst Geschwindigkeit reduziert wird, solange der Fahrer nichts unternimmt. Als erster Querbeschleunigungsgrenzwert kann bspw. ein Wert von 3 m/s² vorgegeben werden.

Der aktuelle Lenkeinschlag und/oder die aktuelle Querbeschleunigung und/oder die aktuelle Gierrate kann entweder mittels eines dafür vorgesehenen Sensors oder aus anderen Signalen durch Berechnung ermittelt werden. Die Fahrzeugzustandsgrößengrenzwerte können fest oder variabel, bspw. in Abhängigkeit von der aktuellen Geschwindigkeit vorgegeben werden.

Für eine Rückkehr aus dem Standby-Modus in einen Aktivmodus, bei dem die Regelung der Geschwindigkeit auf einen vorgegebenen Sollgeschwindigkeitswert wieder aktiv ist, bieten sich verschiedene Alternativen an. So kann in einer vorteilhaften Ausgestaltung des Geschwindigkeitsreglers die Überwachungseinrichtung die Geschwindigkeitsregelfunktion aus dem Standby-Modus automatisch in einen Aktivmodus bzw. den ursprünglich aktiven Betriebsmodus zurückschalten, wenn keine der ausgewerteten Fahrzeugzustandsgrößen den vorgegebenen ersten Fahrzeugzustandsgrößengrenzwert oder einen vorgegebenen zweiten Fahrzeugzustandsgrößengrenzwerte überschreit, also jede der ausgewerteten Fahrzeugzustandsgrößen seinen zweiten Fahrzeugzustandsgrößengrenzwert unterschreitet. Die zweiten Fahrzeugzustandsgrößengrenzwerte können identisch zu den ersten Fahrzeugzustandsgrößengrenzwerten vorgegeben werden. Vorteilhafterweise werden sie jedoch kleiner als die vorgegebenen ersten Fahrzeugzustandsgrößengrenzwerte vorgegeben, damit die Geschwindigkeitsregelung nicht ständig aktiviert und deaktiviert wird. Als zweiter Querbeschleunigungsgrenzwert kann bspw. ein Wert von 2 m/s² vorgegeben werden.

Überschreitet also weder der aktuelle Lenkeinschlag den vorgegebenen zweiten Lenkeinschlaggrenzwert, noch die aktuelle Querbeschleunigung den vorgegebenen zweiten Querbeschleunigungsgrenzwert, noch die aktuelle Gierrate den vorgegebenen zweiten Gierratengrenzwert, kann davon ausgegangen werden, dass sich das Fahrzeug nicht mehr in einer starken Kurve befindet und somit die Geschwindigkeitsregelung wieder aufgenommen werden.

Um sicherzustellen, dass der Fahrer sich nicht auf einem Streckenabschnitt befindet, auf dem mehrere starke Kurven aufeinander folgen und somit ein mehrmaliger Wechsel vom Standby-Modus in einen Aktivmodus erfolgen würde, kann in einer alternativen Ausgestaltung des Geschwindigkeitsreglers die Überwachungseinrichtung die Geschwindigkeitsregelfunktion aus dem Standby-Modus erst dann wieder automatisch in einen Aktivmodus bzw. den ursprünglich aktiven Betriebsmodus zurückschalten, wenn für ein vorgegebenes Zeitintervall keine der ausgewerteten Fahrzeugzustandsgrößen (Lenkeinschlag, Querbeschleunigung und/oder Gierrate) einen der vorgegebenen ersten oder zweiten Fahrzeugzustandsgrößengrenzwerte überschreit, also jede der ausgewerteten Fahrzeugzustandsgrößen seinen ersten oder zweiten Fahrzeugzustandsgrößengrenzwert für ein vorgegebenes Zeitintervall unterschreitet. Das Zeitintervall kann dabei fest oder in Abhängigkeit von verschiedenen Fahrzeug- oder ermittelten Umgebungsparametem (z. B. Navigationsdaten, Straßentyp) variabel vorgegeben werden.

Alternativ oder zusätzlich kann eine Rückkehr aus dem Standby-Modus in einen Aktivmodus auch dann erfolgen, wenn vom Fahrer das Gaspedal betätigt, also gedrückt wird, oder erst dann, wenn das betätigte Gaspedal wieder gelöst wird. Durch die Betätigung des Gaspedals wird deutlich, dass dem Fahrer die Abnahme der Geschwindigkeit nicht oder nicht mehr notwendig erscheint. Somit kann wieder in einen Aktivmodus zurückgekehrt werden. Je nach Ausgestaltung des Reglers kann entweder sofort bei Betätigung des Gaspedals oder erst dann, wenn das betätigte Gaspedal gelöst wird, in den Aktivmodus zurückgekehrt werden. Eine sofortige Rückkehr in den Aktivmodus bei Betätigung des Gaspedals wird in der Regel vom Fahrer nicht bemerkt, da hier die Sollgeschwindigkeit stets der aktuellen Geschwindigkeit entspricht. Sobald der Fahrer den Fuß vom Gaspedal löst, wird die Regelung wahrgenommen, da die Geschwindigkeit gehalten wird, obwohl das Gaspedal nicht betätigt wird.

Die automatische Rückkehrmöglichkeit gemäß der ersten oder zweiten Alternative kann mit der vom Fahrer bewusst vorgenommenen Rückkehr vom Standby-Modus in einen Aktivmodus derart kombiniert werden, dass die Betätigung des Gaspedals als Rückkehr-Aufforderung die automatische Rückkehrschaltung bei Unterscheitung der entsprechenden Fahrzeugzustandsgrößengrenzwerte überlagert. Sobald der Fahrer das Gaspedal tritt, ist erkennbar, dass er wieder schneller fahren möchte. Löst der Fahrer das betätigte Gaspedal, kann in einen Aktivmodus des Geschwindigkeitsregelsystems zurückgekehrt werden, auch wenn zumindest eine der in der Überwachungseinheit ausgewerteten Fahrzeugzustandsgrößen den dazugehörigen ersten oder zweiten Fahrzeugzustandsgrößengrenzwert überschreitet. Dies ist sinnvoll, da dem Fahrer stets die Kontrolle über sein Fahrzeug bzw. die darin enthaltenen Funktionen gegeben werden sollte.

Wird aufgrund einer Gaspedalbetätigung, also aufgrund eines Treten des Gaspedals, oder aufgrund eines Treten des Gaspedals und einem anschlie-βenden Lösen des Gaspedals in den Aktivmodus zurückgekehrt, obwohl zumindest einer der ausgewerteten Fahrzeugzustandsgrößen einen der vorgegebenen ersten und/oder zweiten Fahrzeugzustandsgrößengrenzwerte überschreitet, wird davon ausgegangen, dass dem Fahrer die vorgegebene Schwelle für die Fahrzeugszustandsgrößengrenzwerte zu niedrig erscheint. Deshalb wird beim Lösen des Gaspedals der vorgegebene erste und/oder zweite Fahrzeugzustandsgrößengrenzwert ersetzt. Die vorgegebenen ersten oder zweiten Fahrzeugzustandsgrößengrenzwerte können durch die aktuellen Fahrzeugzustandsgrößen oder eine zur aktuellen Fahrzeugzustandsgrö-βe erhöhte Fahrzeugzustandsgröße ersetzt werden. Wird anhand der aktuellen Fahrzeugzustandsgrößen das Ende der Kurve bzw. des kurvigen Streckabschnitts erkannt, können die derzeit vorgegebenen ersten und zweiten Fahrzeugzustandsgrößengrenzwerte wieder durch die ursprünglichen Fahrzeugzustandsgrößengrenzwerte ersetzt werden.

Betätigt der Fahrer das Gaspedal nicht, wird aus dem Standby-Modus erst dann wieder in einen Aktivmodus zurückgeschaltet, wenn keine der ausgewerteten Fahrzeugzustandsgrößen mehr seinen vorgegebenen ersten oder zweiten Fahrzeugzustandsgrößengrenzwert (für ein vorgegebenes Zeitintervall) überschreitet.

Der Aktivmodus, in den zurückgeschaltet wird, kann verschieden ausgestaltet sein. So kann er in einer ersten Alternative derart ausgestaltet sein, dass nach dem Zurückschalten in den Aktivmodus - bspw. entweder aufgrund der aktuellen Fahrzeugzustandsgrößen oder aufgrund einer Gaspedalbetätigung - als Sollgeschwindigkeit die vor dem Standby-Modus vorgegebene Sollgeschwindigkeit des Fahrzeugs vorgegeben wird. Der Geschwindigkeitsregler würde dann wieder in dem vor dem Standby-Modus betriebenen aktiven Betriebsmodus mit gleicher Sollgeschwindigkeit betrieben werden. Das Fahrzeug würde wieder auf die ursprüngliche Sollgeschwindigkeit beschleunigen und diese bei Erreichen halten.

Alternativ kann der Aktivmodus auch derart ausgestaltet sein, dass bei einer Rückkehr aus dem Standby-Modus als Sollgeschwindigkeit die aktuelle Geschwindigkeit vorgegeben wird. Dadurch kann sichergestellt werden, dass der Fahrer, falls der Standby-Modus länger aktiv war, nicht durch eine plötzliche Beschleunigung irritiert wird.

Alternativ kann die Vorgabe der Sollgeschwindigkeit bei der Rückkehr in einen Aktivmodus auch von der Ursache, warum in den Aktivmodus zurückgeschaltet wird, abhängen. So kann bspw. bei einer kurzen Betätigung durch das Gaspedal und einer damit verbundenen Rückkehr in den Aktivmodus als Sollgeschwindigkeit die ursprüngliche Sollgeschwindigkeit vorgegeben werden. Betätigt der Fahrer das Gaspedal länger, kann als Sollgeschwindigkeit die nach dem Lösen des Gaspedals aktuelle Geschwindigkeit als Sollgeschwindigkeit vorgegeben werden. Ebenso kann bei einer automatischen Rückkehr in den Aktivmodus die Sollgeschwindigkeit in Abhängigkeit von der Dauer des Standby-Modus vorgegeben werden. War der Standby-Modus nur kurz aktiv, kann als Sollgeschwindigkeit die ursprünglich vorgegebene Sollgeschwindigkeit vorgegeben werden. Bei einem länger andauernden Standby-Modus kann als Sollgeschwindigkeit die aktuelle Geschwindigkeit vorgegeben werden.

Alternativ könnte die Sollgeschwindigkeit auch von der Differenz der aktuellen Geschwindigkeit zur ursprünglichen Sollgeschwindigkeit vorgegeben werden.

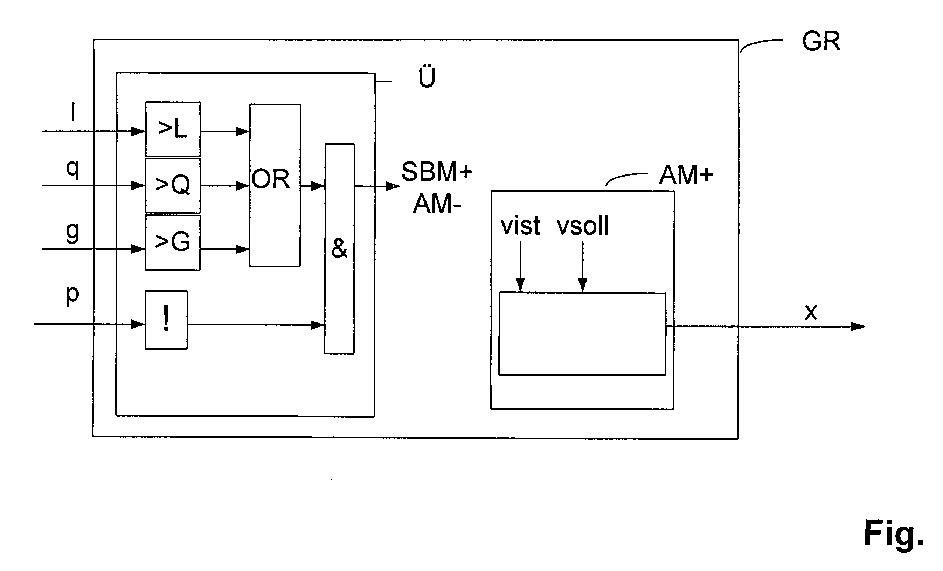

Die Erfindung wird nun anhand des nachfolgenden Ausführungsbeispiels nochmals näher erläutert. Dabei zeigt die einzige Fig. einen vereinfachten Aufbau eines erfindungsgemäßen Geschwindigkeitsreglers.

Die Figur zeigt einen Geschwindigkeitsregler GR, der in einem Aktivmodus AM und einem Standby-Modus SBM betrieben werden kann. Ist der Aktivmodus AM aktiv, also AM+, wird eine Regelung der aktuellen Geschwindigkeit vist auf eine vorgegebene Sollgeschwindigkeit vsoll vorgenommen, indem eine entsprechende Stellgröße x ausgegeben wird.

In einer Überwachungseinheit Ü werden die Fahrzeugzustandsgrößen Lenkwinkel 1, Querbeschleunigung q und Gierrate g überwacht und ausgewertet. Gleichzeitig wird eine Gaspedalbetätigung p überwacht und ausgewertet.

Überschreitet der Lenkwinkel I einen vorgegebenen ersten Lenkwinkelgrenzwert L oder die Querbeschleunigung q einen vorgegebenen ersten Querbeschleunigungsgrenzwert Q oder die Gierrate g einen vorgegebenen ersten Gierratengrenzwert G und liegt keine Gaspedalbetätigung p (Treten und Lösen des Gaspedals) vor, schaltet die Überwachungseinheit Ü in einen Standby-Modus SMB+. Dadurch wird der Aktivmodus deaktiviert, also AM-. Im Standby-Modus SMB+ findet keine Geschwindigkeitsregelung statt, d. h. es wird keine Stellgröße x ausgegeben.

Sobald eine Gaspedalbetätigung p erfasst wird, d. h. ein Treten des Gaspedals und ggf. ein anschließendes Lösen des Gaspedals, wird vom Standby-Modus SBM wieder in den Aktivmodus AM geschaltet. Als Sollgeschwindigkeit vsoll wird dabei die nach dem Lösen der Gaspedalbetätigung p aktuelle Geschwindigkeit vist vorgegeben und eine entsprechende Stellgröße x ausgegeben. Vorteilhafterweise können die vorgegebenen ersten Fahrzeugszustandsgrößengrenzwerte, also der erste Lenkwinkelgrenzwert L, der erste Querbeschleunigungsgrenzwert Q und der erste Gierratengrenzwert G durch die beim Lösen des Gaspedals p aktuell vorliegenden Fahrzeugzustandsgrößen, also Lenkwinkel I, Querbeschleunigung q und Gierrate g oder einen um einen Offsetwert erhöhten Fahrzeugzustandsgrößenwert ersetzt werden, falls die aktuellen Fahrzeugzustandsgrößen I, q oder g den vorgegebenen Fahrzeugzustandsgrößengrenzwert L, Q oder G überschreiten.

Wird keine Betätigung des Gaspedals p bei überschrittenen Fahrzeugzustandsgrößengrenzwerten vorgenommen, wird erst dann wieder in den Aktivmodus AM zurückgekehrt, wenn keine der Fahrzeugzustandsgrößen I, q und g einen der vorgegebenen ersten Fahrzeugzustandsgrößengrenzwerte L, Q oder G überschreiten.

Die Erfindung bietet somit den Vorteil, dass auf einfache Weise aktuelle Fahrweginformationen während einer Geschwindigkeitsregelung berücksichtigt werden können.

## Patentansprüche

1. Geschwindigkeitsregler für Kraftfahrzeuge zur Regelung der Geschwindigkeit auf eine vorgegebene Sollgeschwindigkeit, mit einer Überwachungseinrichtung, die Fahrzeugzustandsgrößen zum Modifizieren der Geschwindigkeitsregelfunktion in Abhängigkeit von ermittelten Fahrweginformationen auswertet, wobei die Überwachungseinheit (Ü) dazu ausgebildet ist, den aktuellen Lenkeinschlag (I) und/oder die aktuelle Querbeschleunigung (q) und/oder die aktuelle Gierrate (g) als Fahrzeugzustandsgrößen (I, q, g) auszuwerten, **dadurch gekennzeichnet, dass** bei Überschreiten zumindest eines vorgegebenen ersten Fahrzeugzustandsgrößengrenzwertes (L, Q, G) durch eine dieser ausgewerteten Fahrzeugzustandsgrößen (I, q, g) die Geschwindigkeitsregelfunktion in einen Standby-Modus (SBM+, AM-) schaltet, wobei als erster Fahrzeugzustandsgrößengrenzwert ein erster Lenkeinschlaggrenzwert (L) und/oder ein erster Querbeschleunigungsgrenzwert (Q) und/oder ein erster Gierratengrenzwert (G) vorgegeben ist und dass die Überwachungseinrichtung (Ü) die Geschwindigkeitsregelfunktion aus dem Standby-Modus (SBM) automatisch in einen Aktivmodus (AM) schaltet, wenn keine der ausgewerteten Fahrzeugzustandsgrößen (I, q, g) einen vorgegebenen zweiten Fahrzeugzustandsgrößengrenzwerte (L, Q, G) überschreitet.

2. Geschwindigkeitsregler nach Anspruch 1, **dadurch gekennzeichnet, dass** die Überwachungseinrichtung (Ü) die Geschwindigkeitsregelfunktion aus dem Standby-Modus (SBM) automatisch in einen Aktivmodus (AM) schaltet, wenn keine der ausgewerteten Fahrzeugzustandsgrößen (I, q, g) den vorgegebenen ersten oder zweiten Fahrzeugzustandsgrößengrenzwerte (L, Q, G) für ein vorgegebenes Zeitintervall überschreitet.

3. Geschwindigkeitsregler nach einem der vorangegangenen Ansprüche, **dadurch gekennzeichnet**, das nach dem Zurückschalten in den Aktivmodus (AM) als Sollgeschwindigkeit (vsoll) die aktuelle Geschwindigkeit (vist) oder die vor dem Standby-Modus (SBM) vorgegebene Sollgeschwindigkeit des Fahrzeugs vorgegeben wird.

## Claims

1. A cruise controller for motor vehicles for adjusting the speed to a predetermined desired speed, with a monitoring device, which evaluates vehicle state variables to modify the cruise control function depending upon determined roadway information, the monitoring unit (Ü) being configured to evaluate the current steering wheel angle (I) and/or the current lateral acceleration (q) and/or the current yaw rate(g) as vehicle state variables (I,q, g), **characterised in that** if at least one predetermined first vehicle state variable limit value (L, Q, G) is exceeded by one of these evaluated vehicle state variables (I, q, g), the cruise control function switches to a standby mode (SBM+, AM-), wherein a first steering wheel angle limit value (L) and/or a first lateral acceleration limit value (Q) and/or a first yaw rate limit value (G) is predetermined as the first vehicle state variable limit value and **in that** the monitoring device (Ü) automatically switches the cruise control function from the standby mode (SBM) to an active mode (AM) if none of the evaluated vehicle state variables (I, q, g) exceeds a predetermined second vehicle state variable limit value (L, Q, G).

2. A cruise controller according to claim 1, **characterised in that** the monitoring device (Ü) automatically switches the cruise control function from the standby mode (SBM) to an active mode (AM) if none of the evaluated vehicle state variables (I, q, g) exceeds the predetermined first or second vehicle state variable limit value (L, Q, G) for a predetermined time interval.

3. A cruise controller according to any one of the preceding claims, **characterised in that** the current speed (vactual) or the desired speed of the vehicle predetermined before the standby mode (SBM) is predetermined as the desired speed (vdesired) after switching back to the active mode (AM).

## Revendications

1. °) Régulateur de vitesse de véhicule automobile pour réguler la vitesse sur une vitesse de consigne prédéfinie, comportant une installation de surveillance qui exploite les grandeurs d'état du véhicule pour modifier la fonction de régulation de vitesse selon les informations de trajet et de circulation obtenues,
- l'unité de surveillance (Ü) exploitant le braquage actuel (I) et/ou l'accélération transversale actuelle (q) et/ou la vitesse de giration actuelle (g) comme des grandeurs d'état du véhicule (1, q, g), régulateur **caractérisé en ce qu'**
- en cas de dépassement d'au moins une première valeur limite de grandeur d'état du véhicule (L, Q, G) prédéfinie par l'une des grandeurs d'état du véhicule ainsi exploitée (1, q, g), la fonction de régulation de vitesse passe en mode d'attente (SBM+, AM-),
- la première valeur limite de la grandeur d'état du véhicule, prédéfinie, étant une première valeur limite de braquage de direction (L) et/ou une première valeur limite d'accélération transversale (Q) et/ou une première valeur limite de vitesse de giration (G), et
- l'installation de surveillance (Ü) commute la fonction de régulation de vitesse à partir du mode d'attente (SBM), automatiquement en mode actif (AM) si aucune des grandeurs d'état exploitée du véhicule (1, q, g) dépasse une seconde valeur de grandeur d'état prédéfinie du véhicule (L, Q, G).

2. °) Régulateur de vitesse selon la revendication 1,
**caractérisé en ce que**
l'installation de surveillance (Ü) commute la fonction de régulation de vitesse automatiquement à partir du mode d'attente (SBM) dans le mode actif (AM) si aucune des grandeurs d'état exploitée (1, q, g) dépasse la première et la seconde valeur limite de grandeur d'état, prédéfinies (L, Q, G) pendant une durée déterminée.

3. °) Régulateur de vitesse selon l'une des revendications précédentes,
**caractérisé en ce qu'**
après le retour au mode actif (AM), la vitesse de consigne (vsol) est la vitesse actuelle (vist) ou une vitesse de consigne du véhicule prédéfinie par le mode d'attente (SBM).
